# EUROPÄISCHE PATENTANMELDUNG

(11) **EP 0 768 440 A1**
(43) Veröffentlichungstag der Anmeldung: **16.04.1997**
(21) Anmeldenummer: 96116332.6
(22) Anmeldetag: 11.10.1996
(51) Int. Cl.: E04F 15/20, E04C 2/24, B32B 3/00

(54) **Plattenförmiges Dämmelement aus Mineralwolle**

(30) Priorität: 13.10.1995 DE 19538226
(71) Anmelder: Pfleiderer Dämmstofftechnik GmbH & Co., 92318 Neumarkt (DE)
(72) Erfinder: Kuhn, Klaus, 81739 München (DE); Vetters, Egon, 92318 Neumarkt (DE); Jarosch, Karl-Heinz, 92348 Berg (DE)
(74) Vertreter: Füchsle, Klaus, Dipl.-Ing.

(57) **Zusammenfassung**

Die vorliegende Erfindung betrifft ein plattenförmiges Trockenestrich-Dämmelement aus Mineralwolle, insbesondere Glaswolle, umfassend einen Hauptabschnitt (2) mit einer relative zur Plattenebene (E) im wesentlichen parallel verlaufenden Faseranordnung (4), und wenigstens einen sich an den Hauptabschnitt (2) anschließenden Randabschnitt (6), der eine relative zur Plattenebene (E) im wesentlichen senkrecht verlaufende Faseranordnung (8) aufweist.

## Beschreibung

Die vorliegende Erfindung betrifft ein plattenförmiges Dämmelement aus Mineralwolle, insbesondere Glaswolle. Des weiteren betrifft die Erfindung ein plattenförmiges Dämmelement aus Mineralwolle, insbesondere Glaswolle, als Zwischenprodukt zur Herstellung des erstgenannten Dämmelements. Schließlich betrifft die Erfindung ein Verfahren zum Herstellen des erstgenannten Dämmelementes aus dem letztgenannten Zwischenprodukt.

Dämmelemente aus Mineralwolle sind in vielfältigen Ausführungsvarianten für die unterschiedlichsten Einsatzzwecke bekannt. Sie finden aufgrund ihrer hohen Feuerresistenz und ihrer Wärme- und schalldämmenden Eigenschaften z.B. bei der Konstruktion von Bauwerken Anwendung als Spannfilze zur Steildachdämmung, als Fassadendämmplatten zur Außenwanddämmung, als Dämmfilze, Akustikdämmplatten, Trennwandplatten und dergleichen zur Innenraumdämmung, oder als Trittschalldämmplatten, Trockenestrichplatten usw. zur Verlegung auf Böden.

Die Erfindung bezieht sich primär auf die letztgenannte Art von Dämmelementen, nämlich plattenförmige Dämmelemente, die als Trittschalldämmplatten beziehungsweise Trockenestrichplatten eingesetzt werden.

Bei derartigen, konventionellen Dämmelementen verlaufen die Mineralwollfasern im wesentlichen parallel zur Plattenebene und sind hochverdichtet. Diese Mineralwollfaserplatten sind zur Erhöhung der Druckfestigkeit üblicherweise auf eine Trägerplatte, wie etwa eine Spanplatte, aufkaschiert. Es hat sich jedoch herausgestellt, daß Dämmelemente mit einem solchen Aufbau sehr empfindlich gegen örtliche Druckbelastungen in ihren Randbereichen sind, wie sie etwa an stark frequentierten Durchgangsbereichen wie Eingangstüren, Durchgangstüren, an Einund Austritten zu Treppen, durch einen Wechsel des auf dem Dämmelement befindlichen Oberbelags, z.B. Wechsel von Teppichboden zu Fliesen, durch Belastungsfälle mit Verkehrslasten ≥ 150 kg/m², wie etwa in der DIN 1055 beschrieben, durch schwere Einrichtungsgegenstände mit Verkehrslasten ≥ 250 kg/m², wie Schränke, Dekoration und dergleichen, oder bei Punktbelastung, Beanspruchung durch Personen usw. auftreten. Dies führt zu einer unerwünschten Absenkung des Plattenrandbereichs und aufgrund des resultierenden Höhenunterschieds zu benachbarten Dämmelementplatten zur Bildung von gefährlichen Hohl- und/oder Stolperstellen, zu einer Verminderung des ästhetischen Eindrucks oder zumindestens zu einer nicht unerheblichen Komfortminderung durch Federung des sich absenkenden Randbereichs. Zudem ist es möglich, daß sich derartige Unebenheiten bei der Aufstellung von Gegenständen auf den Dämmelementplatten negativ auswirken. Überdies hat die Absenkung des Randbereichs auch eine nachteilige örtliche Reduzierung der Trittschalldämmeigenschaften des verwendeten Dämmelementes zur Folge. Werden diese bekannten Dämmelemente so stark verdichtet ausgestaltet, daß sie den vorhergenannten mechanischen Belastungen standhalten, bilden sich jedoch besonders ausgeprägte, unerwünschte Schallbrücken, und die Dämmelemente genügen daher nicht den Anforderungen der Luft- und/oder Trittschalldämmung.

Der Erfindung liegt daher die Aufgabe zugrunde ein einfaches und effektives Dämmelement der eingangs geschilderten Art zu schaffen, mit dem sowohl eine durch örtliche Druckbelastung bedingte Absenkung des Randbereichs oder der Randbereiche vermieden als auch gleichzeitig eine hochwirksame Tritt- und Luftschalldämmung realisiert werden kann.

Diese Aufgabe wird gelöst durch ein erfindungsgemäßes, plattenförmiges Dämmelement mit den Merkmalen des Anspruchs 1. Ein solches Dämmelement, für das neben Glaswolle auch andere geeignete Mineralwollwerkstoffe, insbesondere nach DIN 18165, wie etwa Steinwolle und andere Faserdämmstoffe und dergleichen Anwendung finden können, umfaßt in der einfachsten Ausführungsform einen Hauptabschnitt mit einer relativ zur Plattenebene im wesentlichen parallel verlaufenden Faseranordnung, und wenigstens einen sich an den Hauptabschnitt anschließenden Randabschnitt, der eine relativ zur Plattenebene im wesentlichen senkrecht verlaufende Faseranordnung aufweist. Als Randabschnitt ist im Sinne der Erfindung der an wenigstens eine freie Seite, oder auch nur an einen Teilabschnitt davon, des Dämmelementes angrenzende Plattenbereich zu verstehen. Üblicherweise wird sich der besagte Randabschnitt über die gesamte Länge der wenigstens einen Plattenseite erstrecken; er kann ebenso allseitig vorgesehen sein.

Das erfindungsgemäße Dämmelement kombiniert auf vorteilhafte Art und Weise eine durch die senkrechte Anordnung der Fasern des Randabschnitts bedingte hohe mechanische Festigkeit im kritischen Plattenrandbereich mit einer dennoch hochwirksamen Tritt- und Luftschalldämmung. Somit können durch lokale Druckbelastungen im Randbereich bedingte unerwünschte Absenkungen, die daraus resultierende Bildung von Hohl- und/oder Stolperstellen, sowie ein Federn des Plattenrandbereichs ohne eine negative Auswirkung auf die Tritt- und Luftschalldämmungseigenschaften effektiv vermieden werden. Die dynamische Steifigkeit des Dämmelementes, insbesondere des Randabschnitts, ist stets so bemessen, daß keine Schallbrücken entstehen. Schallschutzmessungen nach DIN 4109, Bauteilprüfung, ergeben ein Verbesserungsmaß von > 26 dB auf Normdecke (Stahlbeton). Bei der Normdecke werden zudem Trittschallschutzmaße ≥ 10 dB erreicht. Überdies ist das erfindungsgemäße Dämmelement einfach und kostengünstig herzustellen. Es ist besonders vorteilhaft sowohl als Trockenestrichelement als auch zur Verlegung auf einem schwimmenden Estrich einzusetzen.

Gemäß einem weiteren Aspekt der vorliegenden Erfindung soll ein geeignetes, plattenförmiges Dämmelement aus Mineralwolle, insbesondere Glaswolle, als Zwischenprodukt zur Herstellung des Dämmelements nach Anspruch 1 geschaffen werden.

Diese Teilaufgabe wird gelöst durch ein erfindungsgemäßes plattenförmiges Dämmelement aus Mineralwolle, insbesondere Mineralwolle nach DIN 18165, wie etwa Glaswolle, Steinwolle und andere Faserdämmstoffe und dergleichen, als Zwischenprodukt zur Herstellung des Dämmelements nach Anspruch 1, mit den Merkmalen des Anspruchs 2. Ein solches Zwischenprodukt-Dämmelement umfaßt einen Hauptabschnitt mit einer relativ zur Plattenebene im wesentlichen parallel verlaufenden Faseranordnung, und wenigstens eine in dem Hauptabschnitt in einem Abstand zu einem Rand des Dämmelements und relativ zur Plattenebene im wesentlichen senkrecht verlaufende Trennfuge, wobei der Abstand mindestens der Dicke des Dämmelementes entspricht und der Bereich zwischen der Trennfuge und dem Rand des Dämmelementes, beziehungsweise der Bereich zwischen zwei benachbarten Trennfugen, einen abtrennbaren Randabschnitt definiert. Die Trennfuge kann prinzipiell durch jedes, für den jeweiligen Werkstoff geeignete Arbeitsverfahren hergestellt werden. Als Trennfuge ist im Sinne der Erfindung auch eine entsprechende Perforation zu verstehen.

Dieses Zwischenprodukt-Dämmelement bietet den besonderen Vorteil, daß es einerseits wie ein gewöhnliches Dämmelement, d.h. ohne Randverstärkung, eingesetzt und andererseits bei Bedarf zu einem Dämmelement nach Anspruch 1 umfunktioniert werden kann. Hierzu wird der werkseitig bereits an dem Zwischenprodukt-Dämmelement vorgesehene Randabschnitt, der im Ausgangszustand im Prinzip lediglich eine Fortsetzung des Hauptabschnitts darstellt und daher noch keine Verstärkungswirkung bietet, an der Trennfuge abgetrennt und um 90 Grad gedreht wieder an die entstandene Trennfläche angesetzt, wodurch das Dämmelement nach Anspruch 1 entsteht. Auf die Befestigung des abgetrennten Randabschnitts an dem beim Trennvorgang verbleibenden Hauptabschnitt wird nachfolgend noch detaillierter eingegangen. Als Trennwerkzeug kann z.B. ein einfaches Messer oder dergleichen dienen. Die Trennfuge fungiert während des Trennens vorteilhaft als Führung. Bei einer entsprechenden Ausgestaltung der Trennfuge, etwa als Perforation, ist der Randabschnitt auch per Hand abzutrennen, wobei die Trennfuge beziehungsweise die Perforation zweckmäßigerweise als eine Art Sollbruchstelle wirkt. Zum Transport des Dämmelementes ist der Randabschnitt dagegen fest und unverlierbar mit dem Hauptabschnitt verbunden und trägt somit auch zu einem geringen Raumbedarf mehrerer zu einem Paket zusammengefaßter Dämmplatten bei. Anstelle des oder zusätzlich zu dem oben beschriebenen, abtrennbar ausgebildeten Randabschnitt können bei Vorliegen von hohen Einzellasten auch ein oder mehrere separate, hochtragfähige Mineralwollrandabschnitte mit stehender Faser zur Verfügung gestellt werden, wobei die jeweiligen Abmessungen dieser Randabschnitte vorzugsweise der jeweils als Hauptabschnitt verwendeten Mineralwollplatte angepaßt sind.

Bei den beiden vorhergenannten erfindungsgemäßen Dämmelementen hat es sich als vorteilhaft erwiesen, daß der Hauptabschnitt und der Randabschnitt des jeweiligen Dämmelementes aus dem gleichen Mineralwollwerkstoff hergestellt sind. Auf diese Weise können der Fertigungsaufwand und die Herstellungskosten erheblich reduziert werden. In Zusammenhang mit dieser Ausführungsform hat es sich ferner als günstig erwiesen, daß der Mineralwollwerkstoff des Hauptabschnitts und des Randabschnitts eine Dichte in einem Bereich von etwa 40 bis 100 kg/m³ besitzt. Vorzugsweise beträgt die Dichte etwa 80 kg/m³. Dieser Dichtebereich stellt insbesondere bei dem Einsatz von Glaswolle sowohl die erforderliche mechanische Festigkeit des Randabschnitts als auch die gewünschten Luft- und Trittschalldämmungseigenschaften des gesamten Dämmelementes sicher. In Abhängigkeit des verwendeten Mineralwollwerkstoffs und der zu berücksichtigenden Verkehrslasten kann jedoch von diesem Wert abgewichen werden.

Als weiteres vorteilhaftes Ausgestaltungsmerkmal ist erfindungsgemäß vorgesehen, daß der Hauptabschnitt und der Randabschnitt des Dämmelementes aus unterschiedlichen Mineralwollwerkstoffen hergestellt werden können. Durch diese Maßnahme können die mechanischen Eigenschaften insbesondere des Randabschnitts der Dämmplatte und deren Tritt- und Luftschalldämmungseigenschaften den jeweiligen Anforderungen entsprechend gezielt manipuliert werden. In Zusammenhang mit dieser Variante hat es sich auch als von Vorteil herausgestellt, daß der Mineralwollwerkstoff des Hauptabschnitts eine Dichte im Bereich von etwa 40 bis 100 kg/m³ und der des Randabschnitts eine Dichte im Bereich von etwa 25 bis 100 kg/m³ besitzt. Diese Dichte führt insbesondere bei der Verwendung von Glaswolle wiederum sowohl zu günstigen mechanischen Eigenschaften des Randabschnitts als auch zu guten Luft- und Trittschalldämmungseigenschaften des gesamten Dämmelementes. In Abhängigkeit des verendeten Mineralwollwerkstoffs und der zu berücksichtigenden Verkehrslasten kann jedoch von den genannten Werten abgewichen werden.

Gemäß einem weiteren vorteilhaften Ausgestaltungsmerkmal der Erfindung sind Verbindungsmittel zwischen dem Hauptabschnitt und dem Randabschnitt vorgesehen. Bei diesen Verbindungsmitteln kann es sich zum Beispiel um einen geeigneten Klebstoff, eine Klebefolie, um mechanische Befestigungsmittel, um eine Schmelzverbindung der benachbarten Mineralwollmaterialien von Haupt- und Randabschnitt oder, wie bei dem Zwischenprodukt-Dämmelement nach Anspruch 2, um eine Fortsetzung des Materials des Hauptabschnitts in den Randabschnitt handeln. Die genannten Verbindungsmittel können bereits werkseitig an der Dämmplatte vorgesehen sein, zum Beispiel bei dem Zwischenprodukt-Dämmelement nach Anspruch 2 ein an der zur Plattenebene weisenden Seite des Randstreifens angebrachter Abzieh-Klebestreifen, oder erst in einem späteren Arbeitsschritt, bei dem der Randabschnitt mit einer relativ zur Plattenebene im wesentlichen senkrecht verlaufenden Faseranordnung gebildet wird, aufgetragen werden.

Es hat sich zudem als zweckmäßig herausgestellt, daß das erfindungsgemäße Dämmelement, gewissermaßen als Grundelement, mit einer Trägerplatte verbunden ist. Die Verbindung wird üblicherweise durch Aufkaschieren des Dämmelementes auf die Trägerplatte geschaffen. Mit Hilfe der Trägerplatte können Druckbelastungen großflächig auf das Dämmelement übertragen und ungünstige punktuelle Belastungen vermieden werden. Darüber hinaus wird mit der Trägerplatte eine geeignete Fläche zum Verlegen von Bodenbelägen, Dekorflächen und dergleichen zur Verfügung gestellt.

Erfindungsgemäß sind bei dem Dämmelement nach Anspruch 1 Verbindungsmittel sowohl zwischen der Trägerplatte und dem Hauptabschnitt als auch zwischen der Trägerplatte und dem Randabschnitt vorgesehen, um ein einstückiges, verlegefertiges Dämmelement zu schaffen, das nach dem Verlegen sofort funktionsfähig ist. Hinsichtlich dem Zwischenprodukt-Dämmelement nach Anspruch 2 hat es sich dagegen als vorteilhaft erwiesen, daß die Verbindungsmittel zwischen der Trägerplatte und dem Hauptabschnitt, nicht jedoch zwischen der Trägerplatte und dem Randabschnitt vorgesehen sind. Somit kann der Randabschnitt durch Abtrennen an der Trennfuge leicht vom Hauptabschnitt gelöst und, wie oben bereits erwähnt, so an die entstandene Trennfläche des Hauptabschnitts angesetzt werden, daß die Faseranordnung des Randabschnitts im wesentlichen senkrecht zur Plattenebene des Dämmelementes und damit in einer ebensolchen Orientierung zur Trägerplatte verläuft. Die vorhergenannten Verbindungsmitteln, vorzugsweise geeignete Klebstoffe, Klebefolien, mechanische Befestigungsmittel und dergleichen, stellen eine großflächige, dauerhafte Verbindung zwischen Dämmelement und Trägerplatte her.

Bei der Trägerplatte handelt es sich insbesondere um eine Holzwerkstoffplatte, eine zementgebundene Holzwerkstoffplatte, eine Spanplatte, eine zementgebundene Spanplatte, eine OSB-Platte (orientierungslose Spanplatte), eine Schichtholzplatte, eine Gipskartonplatte, eine Gipsfaserplatte, eine HDF-(hochverdichtete Faserplatte) oder MDF-Platte (mittelverdichtete Faserplatte) oder dergleichen. Diese Plattentypen haben sich für das vorliegende Einsatzgebiet als günstig erwiesen.

Eine weitere vorteilhafte Ausgestaltungsvariante sieht vor, daß die Trägerplatte mit wenigstens einer Dekorbeschichtung versehen ist. Als Dekorbeschichtung können Vollholzmaterialien, Furniere, Kunststoffe, Melaminpapiere und ähnliches Anwendung finden. Auf der Unterseite der Trägerplatte, das heißt der der Dekorbeschichtung abgewandten Seite der Trägerplatte, ist vorzugsweise ein Gegenzug vorzusehen. Aufgrund dieser Maßnahmen kann somit auf einem geringerwertigen Trägerplattengrundmaterial, wie etwa der vorbezeichneten Spanplatte, mit geringem Materialeinsatz besonders einfach und kostengünstig eine hochwertige, verschleißfeste und ästhetisch ansprechende Oberfläche bereitgestellt werden. Die Dekorbeschichtung besitzt vorteilhafterweise eine strukturierte Oberfläche. Auf diese Weise lassen sich besonders Holzimitate oder andere dekorative Elemente herstellen.

Zur Vermeidung von Beschädigungen der Dekorbeschichtung ist diese erfindungsgemäß mit mindestens einer Schutzschicht versehen. Als Schutzschicht kann zum Beispiel ein Overlay aus Melamin, insbesondere Korund/Melamin, oder dergleichen dienen. Im Sinne der Erfindung ist unter einer Schutzschicht jedoch auch eine von der Dekorbeschichtung der Trägerplatte abziehbare Schutzfolie oder ähnliches zu verstehen.

Da das erfindungsgemäße Dämmelement üblicherweise aus fertigungstechnischen Gründen und zum Zweck der einfacheren Handhabung in seinen Abmessungen beschränkt ist, sind Nut und Feder an der Trägerplatte vorgesehen, so daß durch Aneinanderfügen mehrerer gleichartig ausgebildeter erfindungsgemäßer Dämmelemente auf einfache und effiziente Art und Weise ein großflächiger Bodenbelag geschaffen werden kann. Es hat sich als besonders vorteilhaft herausgestellt, daß Nut und/oder Feder in der Kantenausbildung zusätzlich mit einer Imprägnierung versehen sind. Diese verhindert ein Eindringen von bei einer Reinigung oder durch unachtsames Verschütten auftreten Flüssigkeiten und Verunreinigungen in den stirnseitigen Stoßbereich nebeneinanderliegender Trägerplatten und damit eine mögliche Quellbildung im Kantenbereich. Insbesondere bei der Verwendung von feuchtigkeitsempfindlichen Spanplatten als Trägerplatten kann so die Festigkeit, Haltbarkeit und Lebensdauer der Trägerplatte an den Stoßbereichen erhöht werden. Auch ist es möglich eine durch die vorhergenannten Einflüsse verursachte, unerwünschte Feuchtigkeitsbildung unter der Trägerplatte zu vermeiden.

In diesem Zusammenhang hat es sich auch als sehr positiv erwiesen, daß die Feder mit einer Leimfuge und/oder die Nut mit einer Leimfase versehen ist. Durch Auftragen eines geeigneten Klebstoffes auf die Feder und/oder die Nutunterwange läßt sich nämlich mittels der Leimfuge und Leimfase ein zusätzlicher Abdichtungseffekt am Stoßbereich nebeneinnanderliegender Trägerplatten beziehungsweise Dämmelemente erzielen. Daraus resultieren ebenfalls die bereits in dem vorangegangenen Absatz aufgezeigten Vorteile.

Ein weiteres vorteilhaftes Ausgestaltungsmerkmal der Erfindung sieht vor, daß das Dämmelement wenigstens ein auf einer Seite des Dämmelementes angeordnetes Zusatzdämmelement umfaßt. Dieses Zusatzdämmelement kann demnach sowohl auf der Oberseite, d.h. der später einem Innenraum eines Gebäudes zugewandten Seite des Dämmelementes, als auch auf der Unterseite, d.h. der dem Boden, auf dem das Dämmelement verlegt ist, zugewandten Seite fixiert sein. Wird das erfindungsgemäße Dämmelement mit einer Trägerplatte versehen, ist es vorteilhaft, daß das wenigstens eine Zusatzdämmelement zwischen der Trägerplatte und dem Dämmelement und/oder auf der der Trägerplatte abgewandten Seite des Dämmelements angeordnet ist. Als Zusatzdämmelement ist vorzugsweise eine Mineralwollplatte, insbesondere eine Mineralwollplatte nach DIN 18165 und andere Faserdämmstoffe nach DIN 18164, und/oder eine Schaumstoffplatte und/oder eine Rippenpappe und/oder eine Trockenschüttung und/oder eine Folie oder dergleichen vorgesehen. Mit Hilfe des Zusatzdämmelements lassen sich bestimmte, ergänzende Dämmeigenschaften des erfindungsgemäßen Dämmelementes realisieren. Da einige der vorhergenannten Zusatzdämmelementtypen, wie etwa die Schaumstoffplatte, in der Regel den Trittschallanforderungen nicht genügen, ist das erfindungsgemäße Dämmelement mit seinem Haupt- und Nebenabschnitt sorgfältig auf das verwendete Zusatzdämmelement abzustimmen.

Im Zusammenhang mit der Anbringung des oben beschriebenen Zusatzdämmelementes ist es von Vorteil, daß sich der Randabschnitt mit seiner im wesentlichen senkrecht relativ zur Plattenebene des Dämmelementes verlaufenden Faseranordnung über die gesamte Höhe der aus dem Hauptabschnitt und dem wenigstens einen Zusatzdämmelement gebildeten Schicht erstreckt. Dies ist besonders dann empfehlenswert, wenn sich das Zusatzdämmelement aufgrund seiner Festigkeitseigenschaften ähnlich wie die Randbereiche der eingangs beschriebenen konventionellen Dämmelemente unter Einfluß einer Druckbelastung im Randbereich absenken würde. Ist das Zusatzdämmelement hingegen so stabil, daß bei den dem gesamten Dämmelement zugrundeliegenden Nennlasten per se keine Randabsenkung am Zusatzdämmelement auftritt, kann gegebenenfalls von dieser Ausgestaltungsform abgesehen werden.

Gemäß einem weiteren Aspekt der Erfindung soll ein Verfahren geschaffen werden zum Herstellen eines Dämmelementes nach Anspruch 1 aus einem geeigneten Zwischenprodukt.

Diese Teilaufgabe wird gelöst durch ein erfindungsgemäßes Verfahren zum Herstellen eines Dämmelementes nach Anspruch 1 aus einem Zwischenprodukt nach Anspruch 2 oder 10, wobei das Verfahren die Merkmale des Anspruchs 22 aufweist.

Demgemäß umfaßt das erfindungsgemäße Verfahren die nachfolgenden Schritte: Abtrennen des sich zwischen der Trennfuge im Hauptabschnitt und dem Rand des Dämmelementes erstrackenden Randabschnitts an der Trennfuge; Anordnen des abgetrennten Randabschnitts an dem Dämmelement, so daß die Faseranordnung des Randabschnitts relativ zur Plattenebene im wesentlichen senkrecht verläuft; und Fixieren des abgetrennten Randabschnitts an der Trennfläche des verbleibenden Hauptabschnitts und/oder an der Trägerplatte.
Das erfindungsgemäße Verfahren ist arbeitstechnisch sehr einfach und ohne aufwendige Hilfsmittel auszuführen und liefert als Resultat das erfindungsgemäße Dämmelement nach Anspruch 1 mit den bereits oben geschilderten Vorteilen. Anstelle des abtrennbaren Randabschnitts kann generell auch ein separater Randabschnitt verwendet werden, der in analoger Weise anzuordnen und zu fixieren ist.

Bevorzugte Ausführungsformen, weitere Ausgestaltungsmerkmale und Einzelheiten und Vorteile des erfindungsgemäßen Dämmelementes und des erfindungsgemäßen Verfahrens werden nun nachfolgend unter Bezugnahme auf die Zeichnungen beschrieben werden. Es zeigen:
- Fig. 1: eine schematische Seitenansicht einer ersten Ausführungsform des erfindungsgemäßen Dämmelementes,
- Fig. 2: eine schematische Seitenansicht einer zweiten Ausführungsform des erfindungsgemäßen Dämmelementes,
- Fig. 3: eine schematische Seitenansicht einer dritten Ausführungsform des erfindungsgemäßen Dämmelementes,
- Fig. 4: eine schematische Seitenansicht einer vierten Ausführungsform des erfindungsgemäßen Dämmelementes,
- Fig. 5: eine schematische Seitenansicht einer fünften- - Ausführungsform des erfindungsgemäßen Dämmelementes,
- Fig. 6: eine schematische Seitenansicht einer sechsten Ausführungsform des erfindungsgemäßen Dämmelementes,
- Fig. 7: eine schematische, vergrößerte Darstellung der speziellen Nut-/Federausbildung der Trägerplatte des erfindungsgemäßen Dämmelementes, und
- Fig. 8: eine schematische Draufsicht auf mehrere nebeneinander angeordnete, gleichartig ausgestaltete erfindungsgemäße Dämmelemente.

In der Beschreibung und den Figuren werden, sofern keine weitere Differenzierung erforderlich ist, zur Vermeidung von Wiederholungen für gleiche Bestandteile des erfindungsgemäßen Dämmelementes durchgehend die gleichen Bezugszeichen verwendet.

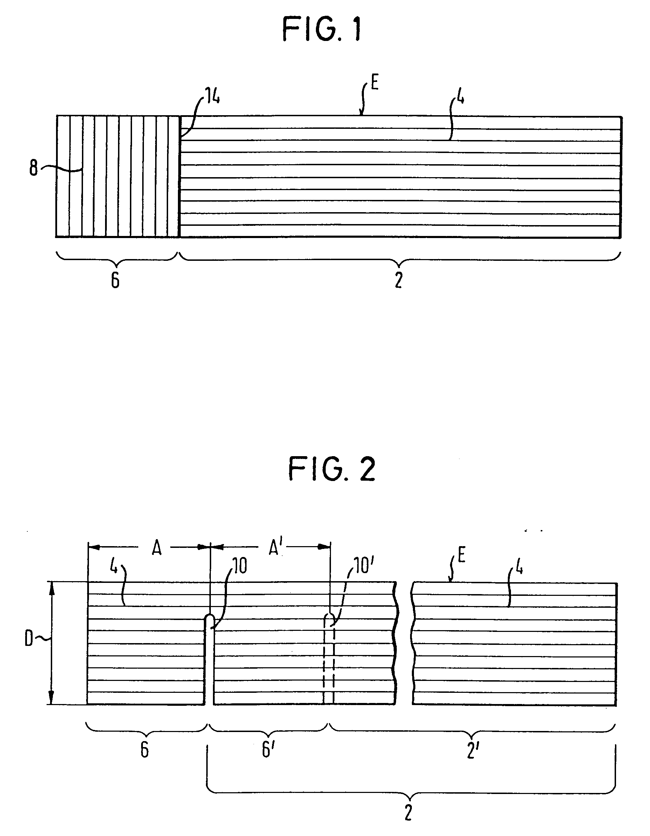

Fig. 1 zeigt eine schematische Seitenansicht einer ersten Ausführungsform des erfindungsgemäßen Dämmelementes. Wie in der Zeichnung gut zu erkennen, umfaßt das aus Mineralwolle beziehungsweise Mineralwollfasern hergestellte Dämmelement einen plattenförmigen Hauptabschnitt 2 mit einer relativ zur Plattenebene E im wesentlichen parallel verlaufenden Faseranordnung, die durch horizontale Linien und das Bezugszeichen 4 angedeutet ist. Für die nachfolgende Beschreibung wird angenommen, daß es sich bei der verwendeten Mineralwolle um Glaswolle handelt, ebenso können jedoch auch andere geeignete Faserdämmstoffe wie etwa Steinwolle oder eine Kombination aus Glaswolle und Steinwolle oder dergleichen zum Einsatz kommen. Das Dämmelement umfaßt ferner einen sich an den Hauptabschnitt 2 anschließenden Randabschnitt 6, der eine relativ zur Plattenebene E im wesentlichen senkrecht verlaufende Faseranordnung 8 aufweist. Der Hauptabschnitt 2 und der Randabschnitt 6 sind im vorliegenden Fall aus unterschiedlichen Glaswollplatten gefertigt, wobei die Glaswollplatte des Hauptabschnitts 2 eine Dichte im Bereich von etwa 40 bis 100 kg/m³ und die Glaswollplatte des Randabschnitts 6 eine Dichte im Bereich von etwa 25 bis 100 kg/m³ besitzt. Ebenso können jedoch für die Teile 2 und 6 des Dämmelementes Glaswollplatten mit gleichen Dichten verwendet werden. Ferner ist es möglich die Glaswollplatten mit einer dünnen Kaschierung aus Vlies, Pappe oder Folie zu versehen. Diese Kaschierung ist in der Zeichnung nicht dargestellt. Der Hauptabschnitt 2 und der Randabschnitt 6 sind durch einen geeigneten Klebstoff 14 fest miteinander verbunden. Der in Fig. 1 gezeigte Randabschnitt 6 kann auch dadurch hergestellt werden, daß eine dünne Glaswollplatte mit einer relativ zur Plattenebene im wesentlichen parallel verlaufenden Faseranordnung mehrmals ziehharmonikaartig gefaltet wird, so daß sich die oben geschilderte Faseranordnung 8 ergibt.

Das Dämmelement nach Fig. 1 wird nachfolgend auch als Grundelement I bezeichnet werden.

In der Fig. 2 ist in schematischer Seitenansicht eine zweite Ausführungsform des erfindungsgemäßen Dämmelementes dargestellt. Dieses im vorliegenden Beispiel ebenfalls aus Glaswolle beziehungsweise Glaswollfasern hergestellte, plattenförmige Dämmelement, das vorzugsweise als Zwischenprodukt zur Herstellung eines Dämmelementes nach Fig. 1 verwendbar ist, umfaßt einen Hauptabschnitt 2 mit einer relativ zur Plattenebene E im wesentlichen parallel verlaufenden Faseranordnung 4. In diesen Hauptabschnitt 2 ist in einem Abstand A zu einem Rand des Dämmelements eine Trennfuge 10 angebracht, die relativ zur Plattenebene E im wesentlichen senkrecht verläuft. Der vorhergenannte Abstand A ist so gewählt, daß er mindestens der Dicke D des Dämmelementes entspricht. Der Bereich zwischen der Trennfuge 10 und dem offenen Rand des Dämmelementes definiert einen abtrennbaren Randabschnitt 6. Der Hauptabschnitt 2 und der Randabschnitt 6 bestehen somit aus dem gleichen Glaswollwerkstoff mit gleicher Faseranordnung und besitzen auch die gleiche Dichte. Vorzugsweise beträgt die Dichte etwa 80 kg/m³. Da der Randabschnitt 6 in dem soeben geschilderten Aufbau lediglich eine durch die Trennfuge 10 vom Hauptabschnitt 2 abgegrenzte Fortsetzung des Hauptabschnitts darstellt, besitzen der Hauptabschnitt 2 und der Randabschnitt 6 im wesentlichen die gleichen mechanischen Eigenschaften. Der Randabschnitt 6 übt in diesem Zustand also noch keine Randverstärkungswirkung aus.

Wie in der Fig. 2 des weiteren durch eine gestrichelte Linie angedeutet, kann mindestens eine zusätzliche Trennfuge 10' in einem Abstand A' von der Trennfuge 10 angebracht sein, so daß der Bereich zwischen den Trennfugen 10 und 10' einen zusätzlichen abtrennbaren Randabschnitt 6' definiert. Der Abstand A' ist wiederum so gewählt, daß er mindestens der Dicke D des Dämmelementes entspricht. Bei Bereitstellung beziehungsweise Verwendung der zusätzlichen Trennfuge 10' verändert sich natürlich auch der Bereich des eigentlichen Hauptabschnitts 2, wie in der Zeichnung durch das Bezugszeichen 2' angedeutet. Die Trennfugen 10 und 10' müssen nicht zwingendermaßen auf der gleichen Plattenseite liegen.

Als Glaswollwerkstoff für das Ausführungsbeispiel gemäß Fig. 2 wird im vorliegenden Fall eine sogenannte "URSA®-Trockenestrichplatte TEP" verwendet. Die wichtigsten technischen Daten dieses Trockenestrichelements sind der nachstehenden Tabelle 1 zu entnehmen.

**TABELLE 1**

| **URSA®-Trockenestrichplatte TEP** |
|---|
| Hochverdichtete Trittschalldämmplatte aus Glaswolle |
| Nichtbrennbar nach DIN 4102 |
| Wärmeleitfähigkeitsgruppe 035 |
| Baustoffklasse A2 |
| Steifigkeitsgruppe nach DIN 18165, Teil 2, ab 10, z.B. 20, 30, 40 |
| Anwendungstyp TK nach DIN 1865 |
| Standardmäßige Dämmstoffdicken unter Belastung: 20 mm, 25 mm und 30 mm |

Die Erfindung ist natürlich nicht auf die Verwendung der "URSA®-Trockenestrichplatte TEP" beschränkt. Es können je nach Anwendungsfall und zu berücksichtigenden Verkehrslasten auch andere geeignete Mineralwollplatten eingesetzt werden.

Das in Fig. 2 gezeigte Dämmelement kann, wie bereits eingangs erwähnt, sowohl als konventionelles Dämmelement ohne Randverstärkung als auch als Zwischenprodukt zur Herstellung eines Dämmelementes gemäß Fig. 1 genutzt werden. Um aus dem Dämmelement nach Fig. 2 ein mit einem verstärkten Randbereich versehenes Dämmelement nach Fig. 1 zu fertigen, wird zuerst der sich zwischen der Trennfuge 10 im Hauptabschnitt 2 und dem Rand des Dämmelementes erstreckende Randabschnitt 6 an der Trennfuge 10 abgetrennt. Hierzu wird ein Trennwerkzeug, zum Beispiel ein Messer oder dergleichen, unter Krafteinwirkung durch die Trennfuge 10 bewegt und die Glaswollplatte durchschnitten, wobei die Trennfuge 10 zum Erzielen eines geraden Schnitts vorteilhafterweise gleichzeitig als Führung dient. Der abgetrennte Randabschnitt 6 wird nun um 90 Grad gedreht an der entstandenen Trennfläche des Hauptabschnitts 2 des Dämmelementes angeordnet, so daß die Faseranordnung 8 des Randabschnitts 6 relativ zur Plattenebene E im wesentlichen senkrecht verläuft, und durch Auftragen eines geeigneten Verbindungsmittels, wie etwa ein Klebstoff, fixiert. Anstelle eines separat aufzutragenden Klebstoffs kann auch ein bereits werkseitig vorgesehenes Verbindungsmittel Anwendung finden, zum Beispiel ein an der zur Plattenebene weisenden Seite des Randstreifens angebrachter Abzieh-Klebestreifen, mit dem der Randstreifen nach dem Abtrennen auf besonders einfache Weise und ohne großen Arbeitsaufwand an die Trennfläche des Hauptabschnitts 2 angesetzt werden kann. Als Resultat dieser Vorgehensweise ergibt sich ein Dämmelement gemäß Fig. 1.

Falls ein breiterer verstärkter Dämmelementrandbereich gefertigt werden soll als dies allein mit dem Randabschnitt 6 zu realisieren ist, kann der zusätzliche Randabschnitt 6' eingesetzt werden. Die hierfür erforderliche Vorgehensweise ist prinzipiell analog zu der vorher geschilderten. Es ergibt sich dann ein Dämmelement, bei dem die Randabschnitte 6 und 6' jeweils mit stehender Faser nebeneinander angeordnet sind. Die Randabschnitte 6 und 6' sind vorteilhafterweise miteinander verbunden. Ergänzend dazu ist es natürlich auch möglich von separaten Randabschnitten mit stehender Faser Gebrauch zu machen.

Das Dämmelement nach Fig. 2 wird nachfolgend auch als Grundelement II bezeichnet werden.

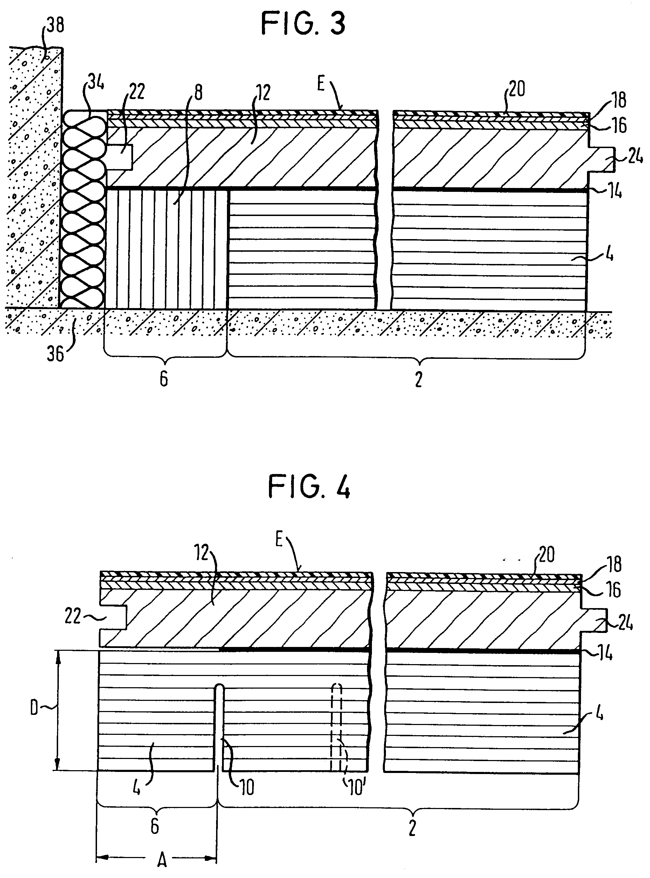

Fig. 3 zeigt eine schematische Seitenansicht einer dritten Ausführungsform des erfindungsgemäßen Dämmelementes in einer typischen Anwendungssituation, wobei das Dämmelement an eine Wand 38 angrenzend auf einem Boden 36 verlegt ist. Das Dämmelement basiert auf dem Grundelement I, mit dem bereits in Zusammenhang mit der Fig. 1 ausführlich erläuterten Aufbau, ist jedoch darüber hinaus an der Oberseite mit einer Trägerplatte 12 mit Gegenzug versehen. Das Grundelement I ist auf diese Trägerplatte 12 aufkaschiert 14, so daß eine feste Verbindung zwischen diesen beiden Teilen besteht. Als Trägerplatte 12 wird im vorliegenden Fall eine Spannplatte verwendet. Ebenso eignet sich eine zementgebundene Spanplatte, eine Schichtholzplatte, eine Gipskartonplatte, eine Gipsfaserplatte, eine HDF- oder MDF-Platte, eine OSB-Platte oder andere Holzwerkstoffplatten, darunter auch zementgebundene Holzwerkstoffplatten, und dergleichen. Die Trägerplatte 12 ist mit einer Dekorbeschichtung 16 versehen, die eine strukturierte Oberfläche und eine Schutzschicht 18 besitzt. Als Dekorbeschichtung kommen unter anderem Vollhölzer, Furniere, Kunststoffe, Melaminpapiere und dergleichen mehr in Betracht. Als Schutzschicht 18 dient beispielsweise ein Overlay aus Melamin, insbesondere Korund/Melamin, oder dergleichen. Zum Transport der Dämmelemente ist vorzugsweise auch eine abziehbare Schutzfolie 20 auf der Trägerplatte angebracht.

Die Trägerplatte 12 ist des weiteren mit Nut 22 und Feder 24 ausgestattet, die ein einfaches Verbinden von mehreren nebeneinander angeordneten, gleichartig ausgestalteten Dämmelementen gestatten. Bei der in Fig. 3 gezeigten Anbringung des Dämmelementes auf dem Boden 36 ist zudem ein an sich bekannter, separater Randdämmstreifen 34 aus Glaswolle zwischen der Wand 38 und der der Wand 38 zugewandten Stirnseite des Dämmelementes angeordnet.

Fig. 4 stellt in schematischer Seitenansicht eine vierte Ausführungsform des erfindungsgemäßen Dämmelementes dar. Diese Variante dient als Zwischenprodukt zur Herstellung des Dämmelementes gemäß Fig. 3. Der Aufbau der verwendeten Trägerplatte 12 entspricht der nach Fig. 3, jedoch ist im vorliegenden Fall das Grundelement II gemäß Fig. 2 auf die Trägerplatte 12 aufkaschiert. Eine Besonderheit des Dämmelementes nach Fig. 4 besteht darin, daß die Verbindungsmittel 14 lediglich zwischen der Trägerplatte 12 und dem Hauptabschnitt 2 des Grundelements II, nicht jedoch zwischen der Trägerplatte 12 und dem sich zwischen der Trennfuge 10 (bzw. 10') und der freien Seite des Dämmelementes beziehungsweise des Grundelements II erstreckenden Randabschnitt 6 (bzw. Randabschnitte 6 und 6') vorgesehen sind. Daher läßt sich der Randabschnitt 6 durch Abtrennen an der Trennfuge 10 leicht lösen und analog zu der bereits im Zusammenhang mit der Fig. 2 erläuterten Art und Weise nachträglich an der entstandenen Trennfläche des Hauptabschnitts 2 anbringen. Aus Gründen der besseren Haltbarkeit sollte dann natürlich auch eine feste Verbindung zwischen Randabschnitt 6 und Trägerplatte 12 hergestellt werden. Eine zusätzliche Sicherung kann über in der Zeichnung nicht dargestellte Drahtstifte erfolgen. Als Resultat ergibt sich ein Dämmelement, wie es in der Fig. 3 dargestellt ist.

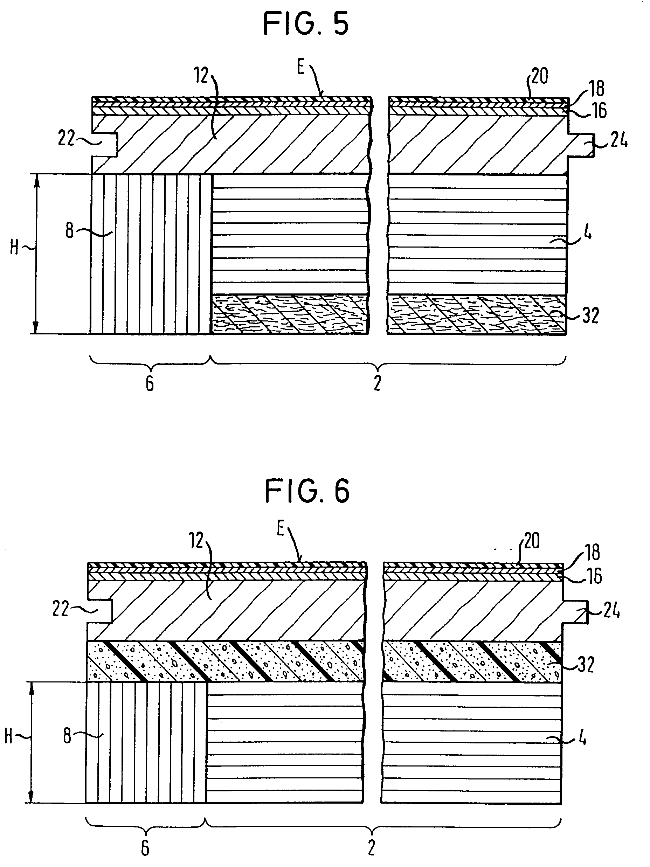

Fig. 5 zeigt eine schematische Seitenansicht einer fünften Ausführungsform des erfindungsgemäßen Dämmelementes. Bei dieser Variante ist ein Zusatzdämmelement 32 an der Unterseite des Hauptabschnitts 2, das heißt an der der Trägerplatte 12 abgewandten Seite des Dämmelements, angebracht. Bei diesem Zusatzdämmelement 32 handelt es sich im vorliegenden Fall um eine Glaswollplatte. Da die Festigkeit der verwendeten Glaswollplatte im Hinblick auf die zu erzielenden Trittschalldämmeigenschaften so gewählt ist, daß sie von sich aus eine Randabsenkung bei vorgegebenen Verkehrslasten nicht verhindern kann, ist der Randabschnitt 6 so ausgelegt, daß er sich über die gesamte Höhe H der aus dem Hauptabschnitt 2 des Dämmelementes und dem Zusatzdämmelement 32 gebildeten Schicht erstreckt und somit die gewünschte Randverstärkung gewährleistet.

In der Fig. 6 ist in schematischer Seitenansicht eine sechste Ausführungsform des erfindungsgemäßen Dämmelementes dargestellt. Bei dieser Modifikation ist eine als Zusatzdämmelement 32 verwendete Schaumstoffplatte aus Extruderschaum, Polystyrolschaum, Polyethylenschaum oder dergleichen zwischen der Trägerplatte 12 und der aus dem Hauptabschnitt 2 und dem Randabschnitt 6 gebildeten Dämmschicht angeordnet. Da die Schaumstoffplatte bei geeigneter Werkstoffwahl eine hinreichende Festigkeit besitzt, um ein Absenken ihres eigenen Randbereichs zu vermeiden, ist es im Gegensatz zu der Ausführungsform nach Fig. 5 nicht erforderlich, daß sich der Radabschnitt 6 über die gesamte Höhe H der aus dem Hauptabschnitt 2 des Dämmelementes und dem Zusatzdämmelement 32 gebildeten Schicht erstreckt. Aus diesem Grund kann das Zusatzdämmelement 32 prinzipiell auch auf der Unterseite des Dämmelementes, das heißt auf der der Trägerplatte 12 abgewandten Seite angeordnet sein und sich über die gesamte Bodenfläche erstrecken.

Als Zusatzdämmelement 32 kommen neben den vorhergenannten Bauteilen auch noch Rippenpappen und/oder Folien und/oder auch Trockenschüttungen oder dergleichen in Betracht.

Der Randabschnitt 6 (bzw. 6') gemäß den Ausführungsbeispielen nach Fig. 1 bis 6 kann generell je nach Belastungsfall aus hochverdichteten oder weniger hochverdichteten Mineralwollfasern bestehen.

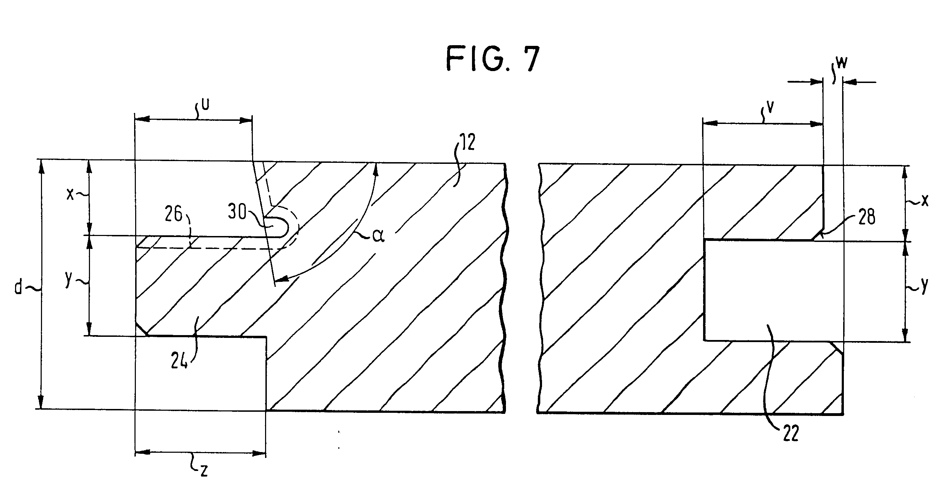

Fig. 7 zeigt eine schematische, vergrößerte Darstellung der speziellen Nut-/Federausbildung der Trägerplatte des erfindungsgemäßen Dämmelementes, wie sie zum Beispiel bei den in den Figuren 3 bis 6 dargestellten Dämmelementen verwendet wird. Wie in der Zeichnung durch eine gestrichelte Linie angedeutet, ist die Nut 22 und die Feder 24 der Trägerplatte 12 mit einer Imprägnierung 26 versehen. Diese verhindert ein Eindringen von bei Reinigungsarbeiten oder durch unachtsames Verschütten auftretenden Flüssigkeiten und Verunreinigungen in den stirnseitigen Stoßbereich nebeneinanderliegender Trägerplatten. Wie aus der Zeichnung des weiteren hervorgeht, kann sich die Imprägnierung bis auf die Stirnseite der Trägerplatte 12 erstrecken.

Außerdem ist die Nut 22 der Trägerplatte 12 mit einer Leimfase 28 und die Feder 24 mit einer Leimfuge 30 versehen. Die Leimfuge 30 ist am Übergang von der Feder 24 zur Stirnseite der Trägerplatte 12 an der Oberseite der Feder 24 ausgebildet. Eine Leimfuge kann auch ausschließlich oder zusätzlich an der Stirnseite der Trägerplatte 12 ausgebildet sein. Die Leimfase 28 ist dagegen als konventionelle Fase geformt. Durch Auftragen eines geeigneten Klebstoffes oder Dichtmittels, zum Beispiel PVAc-Weißleim oder ähnlichem, auf die Oberseite der Feder 26 und/oder die Unterwange der Nut 22 läßt sich mittels der Leimfase 28 und Leimfuge 30 ein Abdichtungseffekt am Stoßbereich nebeneinnanderliegender Trägerplatten beziehungsweise Dämmelemente erzielen.

Gängige Abmessungen der in Fig. 7 dargestellten erfindungsgemäßen Nut-/Federausbildung der Trägerplatte sind der nachstehenden Tabelle 2 zu entnehmen:

**TABELLE 2**

| **Position** | **Maß** |
|---|---|
| α | 87,5 ° |
| d | 25 mm oder 28 mm |
| u | 6 mm |
| v | 7 mm |
| w | 1 mm |
| x | 8 mm |
| y | 10 mm |
| z | 7,5 mm |

Die in der Tabelle 2 genannten Maßangaben sind nur als Beispiel zu verstehen, sie können je nach Ausführungsform des erfindungsgemäßen Dämmelementes natürlich erheblich variieren.

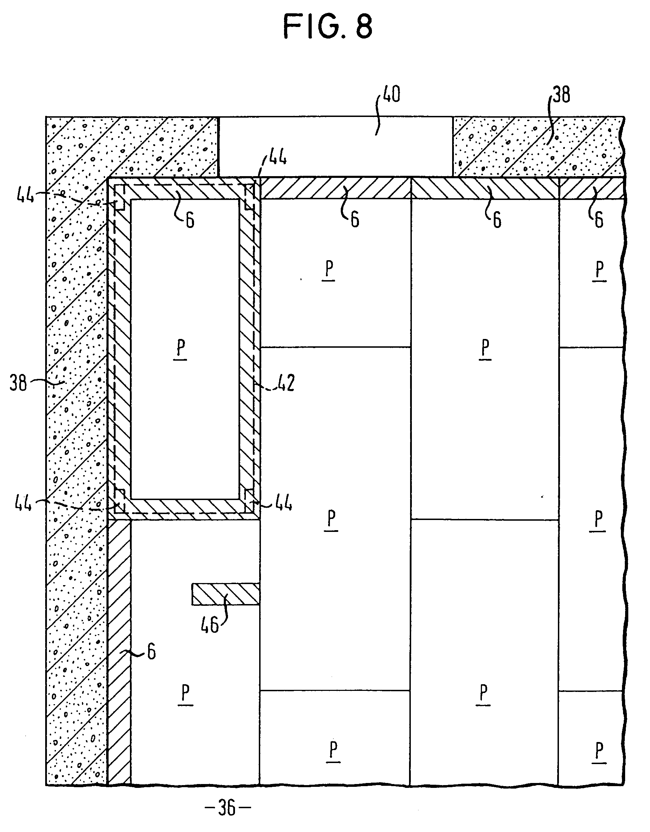

Fig. 8 stellt eine schematische Draufsicht auf mehrere nebeneinander angeordnete und gleichartig ausgestaltete erfindungsgemäße Dämmelemente P dar, die auf dem Boden 36 eines durch Wände 38 abgegrenzten Raums schwimmend, das heißt lediglich im Nut- und Federbereich miteinander verbunden, verlegt sind. Bei den verwendeten Dämmelementen kann es sich zum Beispiel um plattenförmige Dämmelemente gemäß den Figuren 3 und 4 handeln. Wie in der Zeichnung gut zu erkennen, sind die Ränder derjenigen Dämmelemente P, die an die Wände 38 und einen Türdurchbruch 40 angrenzen und demzufolge üblicherweise höher belastet sind, mit verstärkten Randabschnitten 6 versehen, entsprechen also dem Dämmelement nach Fig. 3, während die verbleibenden, geringer belasteten Dämmelemente P in dem in Fig. 4 illustrierten Zwischenproduktstadium belassen wurden. Die Randabschnitte 6 sind in der Fig. 8 zur besseren Unterscheidung schraffiert dargestellt.

Der Fig. 8 ist des weiteren ein Beispiel eines durch einen Schrank 42 belasteten, im Eckbereich des Raumes angeordneten Dämmelementes P zu entnehmen. Der Schrank 42 mit seinen Schrankfüßen 44 ist in der Zeichnung durch eine gestrichelte Linie angedeutet. Das den Schrank 42 tragende Dämmelement P besitzt einen umlaufenden verstärkten Randabschnitt 6. Ergänzend zu einem Randabschnitt 6 eines erfindungsgemäßen Dämmelementes P können auch ein oder mehrere, einem Randabschnitt 6 im wesentlichen entsprechende, zusätzliche Verstärkungsabschnitte mit vertikal verlaufender Faser zur Aufnahme von höheren Belastungen außerhalb des Randbereichs des Dämmelementes vorgesehen sein. Ein solcher Verstärkungsabschnitt ist in der Fig. 8 durch das Bezugszeichen 46 gekennzeichnet.

Erfindungsgemäß ist es nicht zwingendermaßen erforderlich, daß der Übergang vom Hauptabschnitt 2 zum Randabschnitt 6, bei Betrachtung in Draufsicht, über eine gerade Trennlinie beziehungsweise Trennfläche erfolgt; Hauptabschnitt 2 und Randabschnitt 6 können durchaus über zahnartig oder wellenartig oder dergleichen geformte Seitenränder miteinander verbunden sein oder werden. Gleichermaßen ist eine Nut-/Federverbindung zwischen Hauptabschnitt 2 und Randabschnitt 6 denkbar. Diese Ausführungsvarianten sind in den Figuren nicht dargestellt.

Obwohl das erfindungsgemäße Dämmelement hinsichtlich seiner Verwendung als Trittschalldämmplatte beziehungsweise Trockenestrichplatte beschrieben wurde, ist es nicht ausschließlich auf diesen Anwendungsbereich fixiert. Das erfindungsgemäße Dämmelement kann ebenso zur Verlegung auf einem schwimmenden Estrich und prinzipiell auch zur Dämmung von Dächern, Decken, Außenwänden innenseitig, Innenwänden u.a. eingesetzt werden. Auch sind diverse Abwandlungen des erfindungsgemäßen Dämmelementes vorgesehen. Insbesondere können anstelle von oder in Kombination mit Glaswolle auch andere geeignete Fasermaterialien oder Mineralwollwerkstoffe, zum Beispiel Steinwolle oder natürliche Faserdämmstoffe eingesetzt werden. Die Werkstoffkennwerte weichen dann erheblich von den oben genannten Daten ab. Der Randabschnitt der Dämmplatte kann im Sinne der Erfindung zudem an mehreren freien Seiten des Dämmelementes vorgesehen sein oder auch nur an einem oder mehreren Teilabschnitten davon.

Bezugszeichen in den Patentansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2, 2': Hauptabschnitt
- 4: parallel verlaufende Fasern
- 6, 6': Randabschnitt
- 8: senkrecht verlaufende Fasern
- 10, 10': Trennfuge
- 12: Trägerplatte
- 14: Klebstoff
- 16: Dekorbeschichtung
- 18: Schutzschicht
- 20: Schutzfolie
- 22: Nut
- 24: Feder
- 26: Imprägnierung
- 28: Leimfase
- 30: Leimfuge
- 32: Zusatzdämmelement
- 34: Randstreifen
- 36: Boden
- 38: Wand
- 40: Türdurchbruch
- 42: Schrank
- 44: Schrankfüße
- 46: Verstärkungsabschnitt
- A, A': Abstand
- D: Dicke
- E: Plattenebene
- H: Höhe
- P: Dämmelement
- α, d, u-z: diverse Abmessungen

## Patentansprüche

1. Plattenförmiges Trockenestrich-Dämmelement aus Mineralwolle, insbesondere Glaswolle, umfassend
- einen Hauptabschnitt (2) mit einer relativ zur Plattenebene (E) im wesentlichen parallel verlaufenden Faseranordnung (4), und
- wenigstens einen sich an den Hauptabschnitt (2) anschließenden Randabschnitt (6), der eine relativ zur Plattenebene (E) im wesentlichen senkrecht verlaufende Faseranordnung (8) aufweist.

2. Plattenförmiges Trockenestrich-Dämmelement aus Mineralwolle, insbesondere Glaswolle, als Zwischenprodukt zur Herstellung des Trockenestrich-Dämmelementes nach Anspruch 1, umfassend
- einen Hauptabschnitt (2) mit einer relativ zur Plattenebene (E) im wesentlichen parallel verlaufenden Faseranordnung (4), und
- wenigstens eine in dem Hauptabschnitt (2) in einem Abstand (A) zu einem Rand des Dämmelementes und relativ zur Plattenebene (E) im wesentlichen senkrecht verlaufende Trennfuge (10), die einen abtrennbaren Randabschnitt (6) definiert, wobei der Abstand (A) mindestens der Dicke (D) des Trockenestrich-Dämmelementes entspricht.

3. Trockenestrich-Dämmelement nach Anspruch 1 oder 2, **dadurch gekennzeichnet,** daß der Hauptabschnitt (2) und der Randabschnitt (6) aus dem gleichen Mineralwollwerkstoff hergestellt sind.

4. Trockenestrich-Dämmelement nach Anspruch 3, **dadurch gekennzeichnet,** daß der Mineralwollwerkstoff des Hauptabschnitts (2) und des Randabschnitts (6) eine Dichte im Bereich von etwa 40 bis 100 kg/m³, vorzugsweise etwa 80 kg/m³, besitzt.

5. Trockenestrich-Dämmelement nach Anspruch 1, **dadurch gekennzeichnet,** daß der Hauptabschnitt (2) und der Randabschnitt (6) aus unterschiedlichen Mineralwollwerkstoffen hergestellt sind.

6. Trockenestrich-Dämmelement nach Anspruch 5, **dadurch gekennzeichnet,** daß der Mineralwollwerkstoff des Hauptabschnitts (2) eine Dichte im Bereich von etwa 40 bis 100 kg/m³ und der des Randabschnitts (6) eine Dichte im Bereich von etwa 25 bis 100 kg/m³ besitzt.

7. Trockenestrich-Dammelement nach einem oder mehreren der vorhergenannten Ansprüche, **dadurch gekennzeichnet,** daß Verbindungsmittel (14) zwischen dem Hauptabschnitt (2) und dem Randabschnitt (6) vorgesehen sind.

8. Trockenestrich-Dämmelement nach einem oder mehreren der vorhergenannten Ansprüche, **dadurch gekennzeichnet,** daß dieses mit einer Trägerplatte (12) verbunden ist.

9. Trockenestrich-Dämmelement nach Anspruch 8 in Kombination mit Anspruch 1, **dadurch gekennzeichnet,** daß
- Verbindungsmittel (14) zwischen der Trägerplatte (12) und dem Hauptabschnitt (2) und
- zwischen der Trägerplatte (12) und dem Randabschnitt (6) vorgesehen sind.

10. Trockenestrich-Dämmelement nach Anspruch 8 in Kombination mit Anspruch 2, **dadurch gekennzeichnet,** daß Verbindungsmittel (14) zwischen der Trägerplatte (12) und dem Hauptabschnitt (2) vorgesehen sind.

11. Trockenestrich-Dämmelement nach Anspruch 8 oder 9 oder 10, **dadurch gekennzeichnet,** daß die Trägerplatte (12) eine Holzwerkstoffplatte, eine zementgebundene Holzwerkstoffplatte, eine Spanplatte, eine zementgebundene Spanplatte, eine Schichtholzplatte, eine Gipskartonplatte, eine Gipsfaserplatte, eine HDF- oder MDF-Platte, eine OSB-Platte oder dergleichen ist.

12. Trockenestrich-Dämmelement nach einem oder mehreren der vorhergenannten Ansprüche 8 bis 11, **dadurch gekennzeichnet,** daß die Trägerplatte (12) mit wenigstens einer Dekorbeschichtung (16) versehen ist.

13. Trockenestrich-Dämmelement nach Anspruch 12, **dadurch gekennzeichnet,** daß die Dekorbeschichtung (16) eine strukturierte Oberfläche besitzt.

14. Trockenestrich-Dämmelement nach Anspruch 12 oder 13, **dadurch gekennzeichnet,** daß die Dekorbeschichtung (16) mit mindestens einer Schutzschicht (18) versehen ist.

15. Trockenestrich-Dämmelement nach einem oder mehreren der vorhergenannten Ansprüche 8 bis 14, **dadurch gekennzeichnet,** daß die Trägerplatte (12) mit Nut- (22) und Feder (24) ausgestattet ist.

16. Trockenestrich-Dämmelement nach Anspruch 15, **dadurch gekennzeichnet,** daß die Nut- (22) und/oder die Feder (24) mit einer Imprägnierung (26) versehen ist.

17. Trockenestrich-Dämmelement nach Anspruch 15 oder 16, **dadurch gekennzeichnet,** daß die Feder (24) mit einer Leimfuge (30) und/oder die Nut (22) mit einer Leimfase (28) versehen ist.

18. Trockenestrich-Dämmelement nach einem oder mehreren der vorhergenannten Ansprüche, **dadurch gekennzeichnet,** daß dieses wenigstens ein auf einer Seite des Dämmelementes angeordnetes Zusatzdämmelement (32) umfaßt.

19. Trockenestrich-Dämmelement nach einem oder mehreren der Ansprüche 8 bis 18, **dadurch gekennzeichnet,** daß das wenigstens eine Zusatzdämmelement (32) zwischen der Trägerplatte (12) und dem Dämmelement und/oder auf der der Trägerplatte (12) abgewandten Seite des Dämmelementes angeordnet ist.

20. Trockenestrich-Dämmelement nach Anspruch 18 oder 19, **dadurch gekennzeichnet,** daß das wenigstens eine Zusatzdämmelement (32) eine Mineralwollplatte und/oder eine Schaumstoffplatte und/oder eine Rippenpappe und/oder eine Trockenschüttung und/oder eine Folie oder dergleichen ist.

21. Trockenestrich-Dämmelement nach Anspruch 19 oder 20 in Kombination mit Anspruch 1, **dadurch gekennzeichnet,** daß sich der Randabschnitt (6) über die gesamte Höhe (H) der aus dem Hauptabschnitt (2) und dem wenigstens einen Zusatzdammelement (32) gebildeten Schicht erstreckt.

22. Verfahren zum Herstellen eines Trockenestrich-Dämmelementes nach Anspruch 1 aus einem Zwischenprodukt nach Anspruch 2 oder 10, umfassend die nachfolgenden Schritte:
- Abtrennen des sich zwischen der Trennfuge (10) im Hauptabschnitt (2) und dem Rand des Dämmelementes erstreckenden Randabschnitts (6) an der Trennfuge(10),
- Anordnen des abgetrennten Randabschnitts (6) an dem Dämmelement, so daß die Faseranordnung (8) des Randabschnitts (6) relativ zur Plattenebene (E) im wesentlichen senkrecht verläuft, und
- Fixieren des abgetrennten Randabschnitts (6) an der Trennfläche des verbleibenden Hauptabschnitts (2) und/oder an der Trägerplatte (12).

23. Dämmelementfläche, umfassend eine Vielzahl von miteinander verbundenen plattenförmigen Trockenestrich-Dämmelementen (P) gemäß einem der Ansprüche 1 bis 21 und plattenförmigen Trockenestrich-Dämmelementen (P), die eine relativ zur Plattenebene (E) im wesentlichen parallel verlaufende Faseranordnung aufweisen.

24. Dämmelementfläche nach Anspruch 23, **dadurch gekennzeichnet,** daß
- plattenförmige Trockenestrich-Dämmelemente (P), die einen Hauptabschnitt (2) mit einer im wesentlichen parallel verlaufenden Faseranordnung (4) und wenigstens einen sich an den Hauptabschnitt (2) anschließenden Randabschnitt (6) umfassen, der eine relativ zur Plattenebene (E) im wesentlichen senkrecht verlaufende Faseranordnung aufweist, in einem Randbereich der Dämmelementfläche, und
- plattenförmige Trockenestrich-Dämmelemente (P), die eine relativ zur Plattenebene (E) im wesentlichen parallel verlaufende Faseranordnung aufweisen, in einem Mittelbereich der Dämmelementfläche angeordnet sind.

25. Dämmelementfläche nach Anspruch 23 oder 24, **dadurch gekennzeichnet,** daß diese ein oder mehrere plattenförmige Trockenestrich-Dämmelemente (P) umfaßt, die mindestens einen außerhalb des Randbereichs des plattenförmigen Trockenestrich-Dämmelementes (P) vorgesehenen Verstärkungsabschnitt (46) aufweisen.
